# EUROPEAN PATENT SPECIFICATION

(11) **EP 4 593 674 B1**
(45) Date of publication and mention of the grant of the patent: **08.07.2026**
(21) Application number: 23793469.0
(22) Date of filing: 27.09.2023
(51) Int. Cl.: A47J 42/42, A47J 42/50, A47J 42/40

(54) **APPLIANCE FOR GRINDING AND FILLING A FILTER TO BE CONNECTED TO A CUP COFFEE DISPENSING MACHINE WITH COFFEE POWDER**
GERÄT ZUM SCHLEIFEN UND FÜLLEN EINES FILTERS ZUM ANSCHLUSS AN EINE TASSENKAFFEEMASCHINE MIT KAFFEEPULVER
APPAREIL DE MOUTURE ET DE REMPLISSAGE DE FILTRE DE CAFÉ EN POUDRE RACCORDÉ À UNE MACHINE DE DISTRIBUTION DE CAFÉ À LA TASSE

(30) Priority: 29.09.2022 IT 202200020082
(43) Date of publication of application: 06.08.2025
(73) Proprietor: Ambrodesign SAS di Marco Ambrosini & C., 37137 Verona (VR) (IT)
(72) Inventor: AMBROSINI, Marco, 37137 Verona (VR) (IT)
(74) Representative: Luppi, Emanuele
(86) International application number: PCT/IB2023/059612
(87) International publication number: WO 2024/069472

(56) References cited:
- WO-A1-2022/133538
- AU-B2- 2012 209 041
- US-A- 6 095 032
- US-B2- 9 301 637

## Description

### Technical Field

The present invention relates to an appliance for grinding and filling with coffee powder a filter to be connected to a cup coffee dispensing machine.

### Background Art

The problem of coffee preparation with espresso machines is well known, particularly but not exclusively in the catering industry.

In "on-demand" coffee grinder of known type, the user inserts coffee beans into a special hopper and pre-sets upstream, through special manual or electronic devices also of known type, the parameters for obtaining coffee according to the desired grain size.

When this operation is completed, the user starts the machine, which grinds and conveys the coffee powder into a special filter and then presses it manually or through a remote electric presser.

This operation is, especially for catering service workers, rather laborious, as it must be repeated numerous times throughout the day.

To overcome this drawback, cup coffee machines have been designed which comprise actuators built into the machine itself for pressing coffee powder. These machines illustrated, e.g., in US Patent 6,095,032, involve the pressing of ground coffee and conveyed through a special spout towards a filter where the coffee powder is then pressed through a special presser moved by means of actuator means. Another grinder with a compacting functionality is known from AU 2012 209 041 B2.

However, such machines of known type do have some drawbacks.

First of all, coffee dispensing is uneven due to the fact that ground coffee is conveyed by gravity through a spout/channel arranged sideways to the filter underneath.

This results in uneven distribution of freshly ground coffee powder on the filter. The uneven distribution of coffee on the filter also results in a subsequent pressing of the coffee that is equally uneven and a consequent suboptimal quality of the coffee dispensed in the cup, once the filled filter is inserted into the machine for cup coffee dispensing.

The present invention aims to eliminate the aforementioned drawbacks.

### Description of the Invention

Specifically, it is the object of the present invention to make an appliance for grinding and filling with coffee powder a filter to be connected to a cup coffee dispensing machine, wherein the freshly ground coffee powder is evenly distributed over the filter, so that it is then evenly pressed.

A further object of the present invention is to make an appliance for grinding and filling with coffee powder a filter to be connected to a cup coffee dispensing machine which avoids the user from pressing the coffee powder manually or with the help of remote automatic pressers.

The aforementioned objects are achieved by an appliance for grinding and filling with coffee powder a filter to be connected to a cup coffee dispensing machine, according to claim 1.

Further characteristics of the appliance for grinding and filling with coffee powder a filter to be connected to a cup coffee dispensing machine according to the invention are the subject of the dependent claims.

Advantageously, the appliance for grinding and filling with coffee powder a filter to be connected to a cup coffee dispensing machine according to the invention allows freshly ground coffee powder to accumulate evenly over the entire circular periphery of the filter underneath, then allowing even pressing of the powder itself over the entire surface of the filter that collects it.

Still advantageously, the appliance for grinding and filling with coffee powder a filter to be connected to a cup coffee dispensing machine according to the invention provides that the grinding assembly and the presser are aligned according to a single axis, which allows the grinding and pressing of the ground coffee to be operated in a single operation, thus achieving a process carried out more quickly and optimally.

Whereas in the known type of appliances the outflow of freshly ground coffee powder occurred through a spout/channel arranged on the side wall of the chamber containing the grinding elements, towards the filter or manual dispenser underneath, in the appliance according to the invention, the outflow of coffee powder from the grinding assembly occurs radially and 360°, in a continuous and even manner, and the coffee powder is conveyed by gravity through an annular chamber, conveniently provided with a conical-shaped lower end, as far as the inside of the filter underneath.

Still advantageously, the appliance according to the invention is more compact than the appliances of known type.

### Brief Description of the Drawings

Other characteristics and advantages of the present invention will become more apparent from the description of a preferred, but not exclusive, embodiment of an appliance for grinding and filling with coffee powder a filter to be connected to a cup coffee dispensing machine, illustrated by way of an indicative, yet non-limiting example in the accompanying tables of drawings in which:
Figure 1 is an axonometric view of the appliance according to the invention;
Figure 2 is an exploded view of the appliance according to the invention;
Figure 3 is a longitudinal sectional view of the appliance according to the invention;
Figure 4 is an enlarged scale and longitudinal sectional view of a detail from Figure 3;
Figure 5 is an enlarged scale and longitudinal sectional view of the detail from

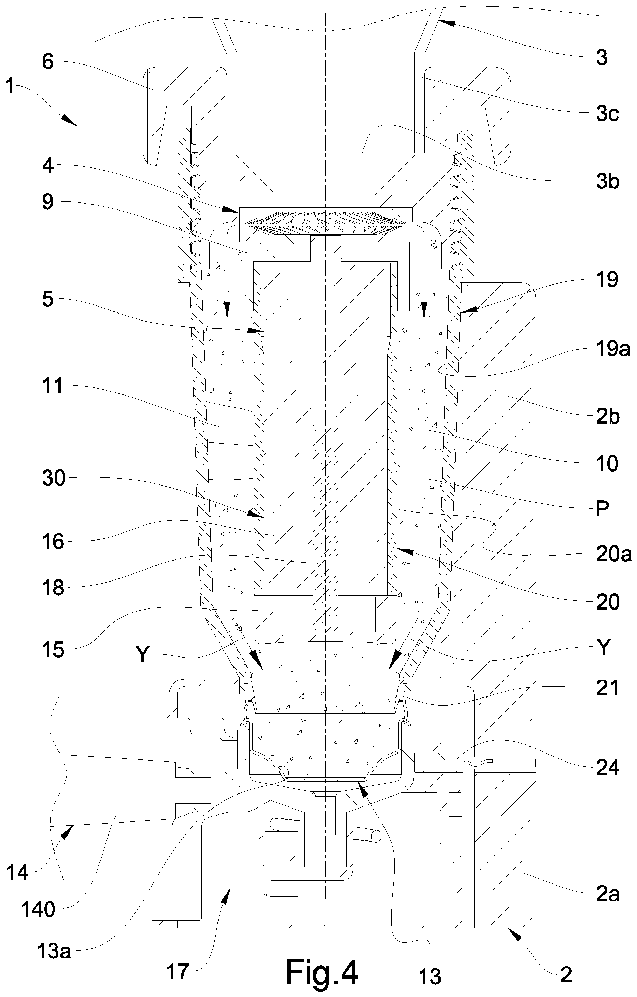

Figure 4, in a different operational configuration;

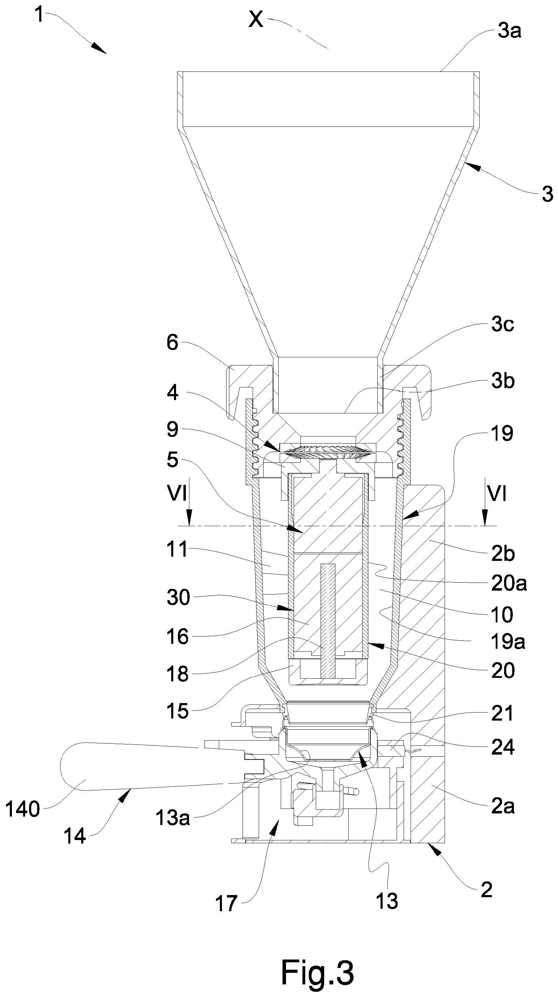

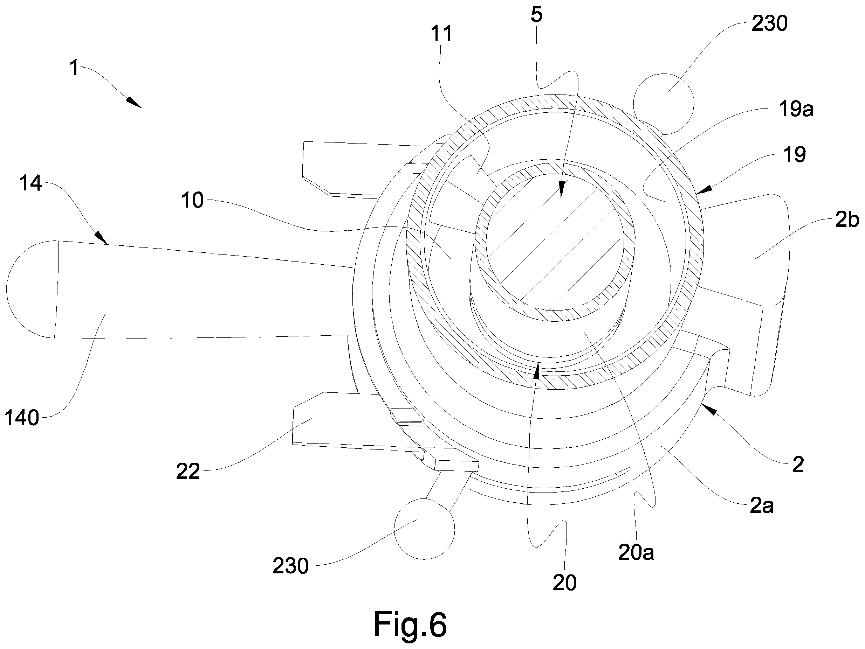

Figure 6 is an axonometric view of the appliance according to the invention cut along the VI - VI plane of Figure 3.

With particular reference to these figures, reference numeral 1 globally denotes an appliance for grinding and filling with coffee powder a filter to be connected to a cup coffee dispensing machine.

The appliance 1, in particular, is intended to grind coffee beans and to fill a filter 13, fitted into a filter holder 14, wherein the filter 13 and the relevant filter holder 14 are of a type known in itself and connectable to a coffee machine, which is also of the traditional type and not covered by the present invention.

Henceforth in the following description, the term "casing" will mean a molded enclosure intended to contain and/or to protect the appliance components according to the invention.

The appliance 1 comprises a holding frame 2 and a hopper 3 arranged superiorly to the holding frame 2.

Advantageously, the holding frame 2 comprises a base 2a from which a supporting pin 2b rises.

The hopper 3 is provided, at one end, with an inlet port 3a for loading coffee beans and, at the opposite end, with a discharge port 3b for ejecting the coffee beans.

In addition, the appliance 1 comprises a grinding assembly 4 arranged inferiorly to the hopper 3 and in communication with the discharge port 3b of the hopper itself.

In turn, the grinding assembly 4 comprises a first grinding element 4a and a second grinding element 4b opposite each other, wherein at least one of the grinding elements 4a, 4b rotates around a vertical axis X by means of a first motor 5.

In the particular embodiment shown in the figures, the first grinding element 4a is fixed while the second grinding element 4b is movable by means of the first motor 5; for this reason, in the remainder of this disclosure, the first grinding element 4a and the second grinding element 4b may also be called fixed grinding element 4a and movable grinding element 4b, respectively.

Alternative embodiments cannot however be ruled out wherein both grinding elements 4a and 4b are movable, e.g., counter-rotating (i.e., one rotating clockwise and the other rotating counterclockwise).

The grinding assembly 4 is configured to reduce coffee beans to powder according to a grain size preset by the operator. This pre-setting of the grain size is done by adjusting the distance of the fixed grinding element 4a from the movable grinding element 4b by means of a ring nut 6.

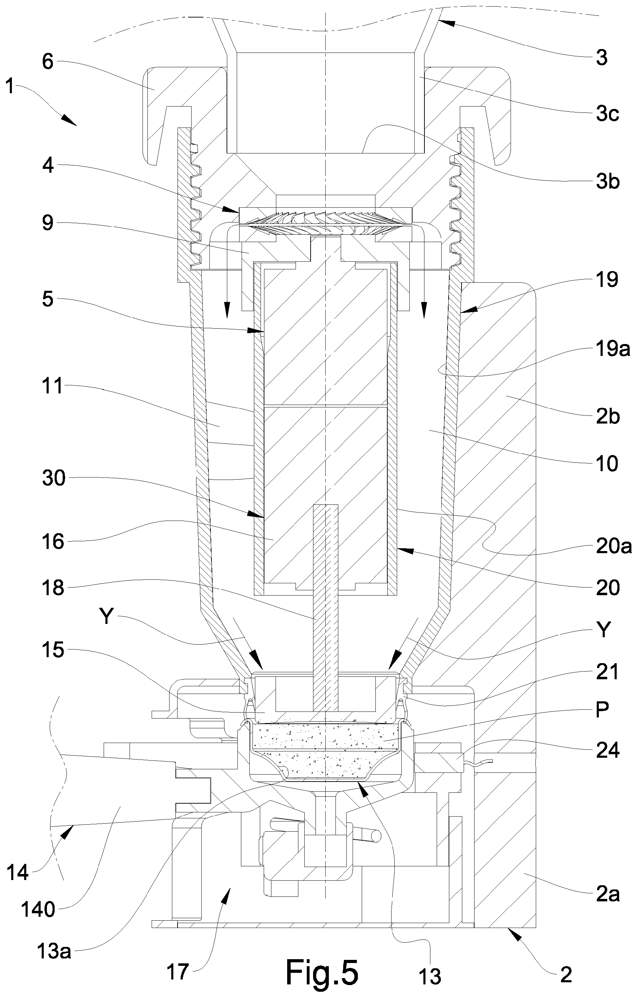

By manually turning the ring nut 6 so as to move the fixed grinding element 4a closer to the movable grinding element 4b, coffee powder P (visible in Figures 4 and 5) is obtained with finer grain size and vice versa.

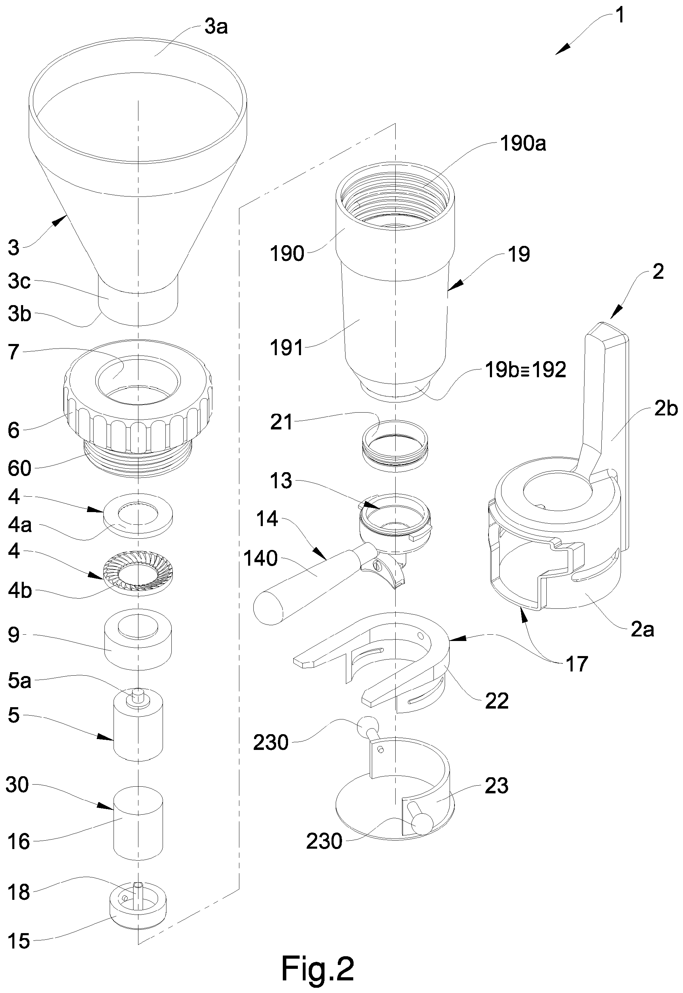

Figure 2 shows that the hopper 3 is associated with the ring nut 6 by keying an end part 3c of the hopper 3 into a central hole 7 of the ring nut 6.

The end part 3c has a smaller cross section than the inlet port 3a.

As mentioned, the movable grinding element 4b of the grinding assembly 4 is set in rotation by the first motor 5.

In more detail, the first motor 5 is provided with a rotating motor shaft 5a which defines the vertical axis X around which the movable grinding element 4b rotates. In the embodiment shown in the figures, the rotating motor shaft 5a is advantageously connected to a support 9, on which the movable grinding element 4b is attached.

Since the movable grinding element 4b is locked together with the support 9, then when the latter is set in rotation by the first motor 5, the movable grinding element 4b also rotates together with the support 9.

The fixed grinding element 4a is attached internally and locked together with the ring nut 6.

The appliance 1 according to the invention comprises a first casing 19 and a second casing 20 of tubular conformation and substantially coaxial to the vertical axis X.

The first casing 19 is associated with the holding frame 2; in particular, the first casing 19 comprises an outer side surface which is advantageously associated with the supporting pin 2b.

The second casing 20, on the other hand, is arranged within the first casing 19; conveniently, the second casing 20 is associated with the first casing 19 by means of a supporting arm 11 which joins an inner surface 20a of the first casing 19 with an outer surface 20a of the second casing 20.

The first casing 19 and the second casing 20 are spaced apart from each other by means of a gap defining an annular chamber 10 adapted to receive the coffee powder P ground by the grinding assembly 4 and to convey it towards a filter 13 for coffee machines arranged where a bottom of the annular chamber 10 is located.

The first casing 19, e.g., has the shape of a tube with a profile slightly flared downwards.

Advantageously the first casing 19 also has a lower ending piece 19b of conical shape, which operates as a funnel to concentrate, towards the filter 13, the coffee powder P dropping along the annular chamber 10.

In the particular embodiment shown in the figures, the first casing 19 e.g. comprises:
- a first section 190, of cylindrical conformation, which is arranged at the top of the first casing 19 and is provided with an internal thread 190a, on which the ring nut 6 is screwed by means of an external thread 60 formed on the ring nut itself;
- a second section 191, joined inferiorly to the first section 190, having a substantially conical profile and converging downwards;
- a third section 192, joined inferiorly to the second section 191, having a substantially conical profile and converging downwards with a greater slope than that of the second section 191.

The third section 192 of the first casing 19 defines the aforementioned lower ending piece 19b and terminates in the proximity of the filter 13 fitted into the filter holder 14.

A seal 21 is connected at the lower end of the third section 192 of the first casing 19, which seal is advantageously configured to prevent accidental spilling of the coffee powder P outside the appliance 1.

The second casing 20 conveniently has a cylindrical profile and encloses the first motor 5; in particular, the first motor 5 is arranged within the second casing 20 inferiorly to the grinding assembly 4, which grinding assembly 4 is placed at the top of the second casing 20, outside it.

Advantageously, at least one of either the inner surface 19a of the first casing 19 or the outer surface 20a of the second casing 20, preferably both, is made of a non-stick material, so as to prevent the deposit of coffee powder along the annular chamber 10.

For this purpose, the inner surface 19a of the first casing 19 and/or the outer surface 20a of the second casing 20 can be made non-stick by heat treatment and/or coating, which are known in themselves.

Alternatively, the appliance 1 may provide for the fabrication of a shaped coating layer, having a profile which can match that of the inner surface 19a and/or of the outer surface 20a, which is fabricated separately from the first casing 19 and from the second casing 20 and which is applied to the inner surface 19a and/or to the outer surface 20a during the assembly phase.

Also in accordance with the present invention, the appliance 1 comprises actuating means 30 arranged within the second casing 20 and adapted to move a presser 15 along the vertical axis X at the bottom of the annular chamber 10. The presser 15 is configured to press the coffee powder P collected in the filter 13, as shown in Figure 5, and, for this purpose, is conveniently placed where the bottom of the second casing 20 is located, outside it.

In this regard, it is pointed out that the filter 13, and in particular the periphery 13a thereof, is the arrival point of the coffee powder P, where the coffee powder P is conveyed as it drops by gravity along the annular chamber 10, is deflected by the lower ending piece 19b of conical shape, following the direction of the arrows Y as shown in Figures 4 and 5, and collects within the filter 13 underneath. This creates, by grinding, a filling of coffee powder P with even thickness in the filter 13 from its periphery 13a towards the center. Then, as a result of the pressing of the coffee powder P by means of the presser 15, the powder is evenly distributed over the entire circular surface of the filter 13.

It is also pointed out that since the coffee powder P flows radially and uniformly (360°) out of the grinding assembly 4 as it enters the annular chamber 10, it ends up to be evenly distributed inside the filter 13 as well.

Conveniently, the actuating means 30 comprise a second motor 16 adapted to operate a linear actuator 18 connected to the presser 15.

By way of non-limiting example only, the linear actuator 18 can be either a cam or a worm screw.

Advantageously, the grinding assembly 4, the first motor 5, the actuating means 30 and the presser 15 are aligned with each other along the vertical axis X, with the grinding assembly 4 arranged on the top, the first motor 5 arranged below the grinding assembly 4, the actuating means 30 arranged below the first motor 5 and the presser 15 arranged below the actuating means 30.

The filter 13 is supported by the filter holder 14 which, in turn, is provided with a handle 140.

The filter holder 14 is intended to be supported by the appliance 1 during grinding and filling the filter 13 with the coffee powder P.

For this purpose, the appliance 1 comprises at least one housing 17 formed in the holding frame 2 and adapted to receive and hold the filter 13 during the grinding and filling operations of the filter 13.

The housing 17 is conveniently obtained in the base 2a.

The housing 17 comprises, e.g., a height-adjustable shaped holding element 22 and a shaped member 23 provided with a pair of knobs 230.

These knobs 230 are used by the user to adjust the height of the shaped holding element 22 of the filter holder 14, as will be better explained below.

To promote the operation thereof, the appliance 1 comprises at least one automatic activation device 24 adapted to automatically activate the first motor 5 when the filter 13 is placed in a predefined position.

The automatic activation device 24 is selected from the list comprising: a pressure activator, an electric contact activator or a photocell activator.

Conveniently, the automatic activation device 24 is positioned where the housing 17 is located and, e.g., is mounted on the shaped holding element 22.

In actual facts, the predefined position wherein the first motor 5 is automatically activated is the position in which the filter 13 and the relevant filter holder 14 are placed in the housing 17; in this position, the automatic activation device 24 detects that the filter 13 and the relevant filter holder 14 are correctly placed on board the appliance 1, i.e., below the annular chamber 10, and activates the first motor 5 to start coffee grinding.

In combination with or as an alternative to the automatic activation device 24, the appliance 1 may comprise a manual activation device, not shown in the figures, which consists, e.g., of a button, a lever or the like; in this case, once the filter 13 and the filter holder 14 are fitted into the housing 17, the first motor 5 and, consequently, the grinding by the grinding assembly 4 turn on only when the user operates the manual activation device.

The turning off of the first motor 5 and the consequent activation of the actuating means 30, on the other hand, preferably occur in a timed manner; in other words, after a predefined time of activation of the first motor 5, which can be set depending on the amount of coffee powder P to be ground (corresponding to the amount of coffee to be loaded into the filter 13), the first motor 5 automatically turns off and, equally automatically, the actuating means 30 are activated to press the coffee powder P into the filter 13.

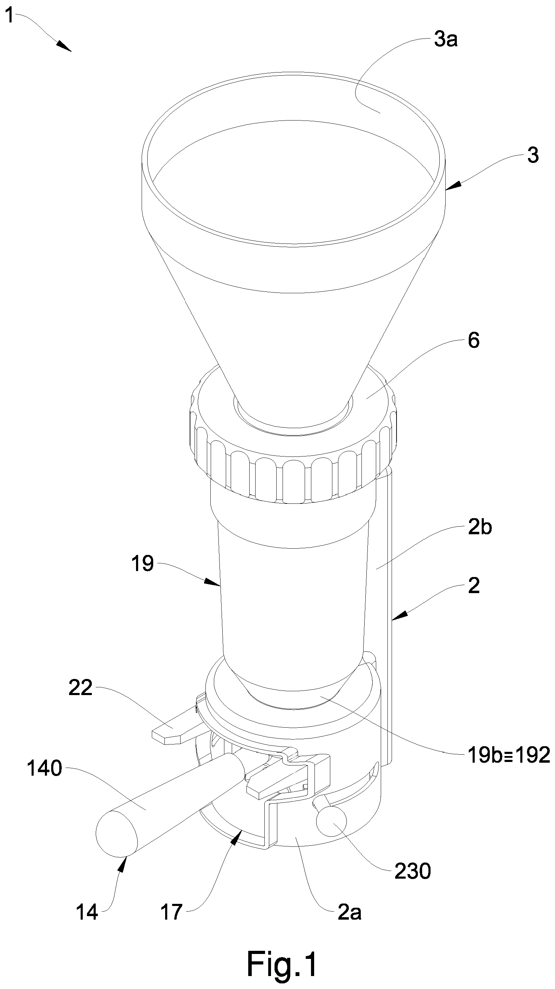

Once assembled into its various components, the appliance 1 has the configuration shown in Figure 1.

### Embodiments of the Invention

With reference to all the figures, the operation of the appliance 1 is as follows. First, the user loads the hopper 3 with coffee beans, after pre-setting in advance the desired grain size by manually turning the ring nut 6.

Next, the user inserts the filter 13 into the filter holder 14 and places the filter holder 14 into the housing 17, by adjusting the height thereof by turning the knobs 230.

Upon activation of the first motor 5, which as mentioned can be done automatically (via the automatic activation device 24) or manually (via a button, a lever or the like), the coffee beans conveyed from the hopper 3 to the grinding assembly 4 are ground and reduced into coffee powder P.

The newly generated coffee powder P is partly conveyed by gravity along the annular chamber 10 to the periphery 13a of the filter 13.

In addition to gravity, the fact of conveying the coffee powder P is also facilitated by the movement of the fixed grindstone 4a and of the movable grindstone 4b, which are opposite each other. Such movement of the grindstones 4a and 4b, as well as their vibration, in fact, create a turbulent air flow adapted to promote the conveying of the coffee powder P through the annular chamber 10.

In this way, advantageously, the turbulent air flow due to the movement of the grindstones 4a and 4b and to their vibration prevents the coffee powder from consequently, the grinding by the grinding assembly 4 turn on only when the user operates the manual activation device.

The turning off of the first motor 5 and the consequent activation of the actuating means 30, on the other hand, preferably occur in a timed manner; in other words, after a predefined time of activation of the first motor 5, which can be set depending on the amount of coffee powder P to be ground (corresponding to the amount of coffee to be loaded into the filter 13), the first motor 5 automatically turns off and, equally automatically, the actuating means 30 are activated to press the coffee powder P into the filter 13.

Once assembled into its various components, the appliance 1 has the configuration shown in Figure 1.

### Embodiments of the Invention

With reference to all the figures, the operation of the appliance 1 is as follows. First, the user loads the hopper 3 with coffee beans, after pre-setting in advance the desired grain size by manually turning the ring nut 6.

Next, the user inserts the filter 13 into the filter holder 14 and places the filter holder 14 into the housing 17, by adjusting the height thereof by turning the knobs 230.

Upon activation of the first motor 5, which as mentioned can be done automatically (via the automatic activation device 24) or manually (via a button, a lever or the like), the coffee beans conveyed from the hopper 3 to the grinding assembly 4 are ground and reduced into coffee powder P.

The newly generated coffee powder P is partly conveyed by gravity along the annular chamber 10 to the periphery 13a of the filter 13.

In addition to gravity, the fact of conveying the coffee powder P is also facilitated by the movement of the fixed grinding element 4a and of the movable grinding element 4b, which are opposite each other. Such movement of the grinding elements 4a and 4b, as well as their vibration, in fact, create a turbulent air flow adapted to promote the conveying of the coffee powder P through the annular chamber 10.

In this way, advantageously, the turbulent air flow due to the movement of the grinding elements 4a and 4b and to their vibration prevents the coffee powder from
operation with the appliance according to the invention.

## Claims

1. Appliance (1) for grinding and filling with coffee powder a filter to be connected to a cup coffee dispensing machine comprising:
- a holding frame (2);
- a hopper (3), arranged superiorly to the holding frame (2) and provided with an inlet port (3a) for loading coffee beans and with a discharge port (3b) for ejecting said coffee beans;
- a grinding assembly (4), arranged inferiorly to said hopper (3) and in communication with said discharge port (3b), comprising at least one first grinding element (4a) and at least one second grinding element (4b) opposite each other, at least one of said grinding elements (4a, 4b) rotating around a vertical axis (X) by means of a first motor (5);
**characterized by** the fact that it comprises:
- a first casing (19) of tubular conformation associated with said holding frame (2) and substantially coaxial to said vertical axis (X);
- a second casing (20) of tubular conformation arranged within said first casing (19) and substantially coaxial to said vertical axis (X), wherein said first casing (19) and said second casing (20) are spaced apart from each other by a gap defining an annular chamber (10) adapted to receive coffee powder (P) ground by said grinding assembly (4) and to convey it to a filter (13) for coffee machines arranged where a bottom of said annular chamber (10) is located;
- actuating means (30) arranged within said second casing (20) and adapted to move a presser (15) along said vertical axis (X) at said bottom of the annular chamber (10), said presser (15) being configured to press said coffee powder (P) collected in said filter (13).

2. Appliance (1) according to claim 1, **characterized by** the fact that said grinding assembly (4), said first motor (5), said actuating means (30) and said presser (15) are aligned with each other along said vertical axis.

3. Appliance (1) according to one or more of the preceding claims, **characterized by** the fact that said first motor (5) is arranged within said second casing (20) inferiorly to said grinding assembly (4).

4. Appliance (1) according to one or more of the preceding claims, **characterized by** the fact that said actuating means (30) comprise a second motor (16) adapted to operate a linear actuator (18) connected to said presser (15).

5. Appliance (1) according to one or more of the preceding claims, **characterized by** the fact that said second casing (20) is associated with said first casing (19) by means of at least one supporting arm (11).

6. Appliance (1) according to one or more of the preceding claims, **characterized by** the fact that said first casing (19) has a lower ending piece (19b) of conical shape.

7. Appliance (1) according to one or more of the preceding claims, **characterized by** the fact that at least one of either an inner surface (19a) of said first casing (19) or an outer surface (20a) of said second casing (20) is made of a non-stick material.

8. Appliance (1) according to one or more of the preceding claims, **characterized by** the fact that it comprises at least one housing (17) formed in said holding frame (2) and adapted to receive and hold said filter (13) during grinding and filling the filter (13) with said coffee powder (P).

9. Appliance (1) according to one or more of the preceding claims, **characterized by** the fact that it comprises at least one automatic activation device (24) adapted to automatically activate said first motor (5) when said filter (13) is placed in a predefined position.

10. Appliance (1) according to claim 9, **characterized by** the fact that said automatic activation device (24) is selected from the list comprising: a pressure activator, an electric contact activator or a photocell activator.

## Patentansprüche

1. Gerät (1) zum Mahlen und Befüllen eines Filters zum Anschluss an eine Tassenkaffeemaschine, mit:
- einem Halterahmen (2);
- einem Trichter (3), der oberhalb des Halterahmens (2) angeordnet und mit einer Einfüllöffnung (3a) zum Einfüllen von Kaffeebohnen sowie mit einer Auslassöffnung (3b) zum Ausgeben der Kaffeebohnen versehen ist;
- einer Mahlbaugruppe (4), die unterhalb des Trichters (3) angeordnet ist und mit der Auslassöffnung (3b) in Verbindung steht, umfassend mindestens ein erstes Mahlelement (4a) und mindestens ein zweites Mahlelement (4b), die einander gegenüberliegen, wobei mindestens eines der Mahlelemente (4a, 4b) mittels eines ersten Motors (5) um eine vertikale Achse (X) rotiert;
**dadurch gekennzeichnet, dass** es umfasst:
- eine erste Hülle (19) von rohrförmiger Gestalt, die mit dem Halterahmen (2) verbunden und im Wesentlichen koaxial zu der vertikalen Achse (X) ist;
- eine zweite Hülle (20) mit rohrförmiger Gestalt, die innerhalb der ersten Hülle (19) angeordnet und im Wesentlichen koaxial zu der vertikalen Achse (X) ist, wobei die erste Hülle (19) und die zweite Hülle (20) durch einen Spalt zueinander beabstandet sind, der eine ringförmige Kammer (10) definiert, die ausgebildet ist, von der Mahlbaugruppe (4) gemahlenes Kaffeepulver (P) aufzunehmen und es zu einem Filter (13) für Kaffeemaschinen zu befördern, der an der Stelle angeordnet ist, an der sich der Boden der ringförmigen Kammer (10) befindet;
- Betätigungsmittel (30), die innerhalb der zweiten Hülle (20) angeordnet und ausgebildet sind, einen Presser (15) entlang der vertikalen Achse (X) an dem Boden der ringförmigen Kammer (10) zu bewegen, wobei der Presser (15) ausgebildet ist, das in dem Filter (13) gesammelte Kaffeepulver (P) zu pressen.

2. Gerät (1) nach Anspruch 1, **dadurch gekennzeichnet, dass** die Mahlbaugruppe (4), der erste Motor (5), die Betätigungsmittel (30) und der Presser (15) entlang der vertikalen Achse relativ zueinander ausgerichtet sind.

3. Gerät (1) nach einem oder mehreren der vorhergehenden Ansprüche, **dadurch gekennzeichnet, dass** der erste Motor (5) innerhalb der zweiten Hülle (20) unterhalb der Mahlbaugruppe (4) angeordnet ist.

4. Gerät (1) nach einem oder mehreren der vorhergehenden Ansprüche, **dadurch gekennzeichnet, dass** die Betätigungsmittel (30) einen zweiten Motor (16) umfassen, der ausgebildet ist, einen mit dem Presser (15) verbundenen Linearantrieb (18) zu betätigen.

5. Gerät (1) nach einem oder mehreren der vorhergehenden Ansprüche, **dadurch gekennzeichnet, dass** die zweite Hülle (20) mittels mindestens eines Tragarms (11) mit der ersten Hülle (19) verbunden ist.

6. Gerät (1) nach einem oder mehreren der vorhergehenden Ansprüche, **dadurch gekennzeichnet, dass** die erste Hülle (19) ein unteres Endstück (19b) mit konischer Form aufweist.

7. Gerät (1) nach einem oder mehreren der vorhergehenden Ansprüche, **dadurch gekennzeichnet, dass** mindestens eine von entweder einer Innenfläche (19a) der ersten Hülle (19) oder einer Außenfläche (20a) der zweiten Hülle (20) aus einem Antihaftmaterial besteht.

8. Gerät (1) nach einem oder mehreren der vorhergehenden Ansprüche, **dadurch gekennzeichnet, dass** es mindestens ein Gehäuse (17) umfasst, das in dem Halterahmen (2) ausgebildet und dazu ausgelegt ist, während des Mahlens und Befüllens des Filters (13) mit dem Kaffeepulver (P) den Filter (13) aufzunehmen und zu halten.

9. Gerät (1) nach einem oder mehreren der vorhergehenden Ansprüche, **dadurch gekennzeichnet, dass** es mindestens eine automatische Aktivierungsvorrichtung (24) umfasst, die ausgebildet ist, den ersten Motor (5) automatisch zu aktivieren, wenn der Filter (13) in eine vordefinierte Position gebracht wird.

10. Gerät (1) nach Anspruch 9, **dadurch gekennzeichnet, dass** die automatische Aktivierungsvorrichtung (24) aus der Liste ausgewählt ist, die umfasst: einen Druckaktivator, einen elektrischen Kontaktaktivator oder einen Fotozellenaktivator.

## Revendications

1. Appareil (1) pour moudre le café et remplir de poudre de café un filtre destiné à être raccordé à une machine de distribution de café à la tasse, comprenant :
- un cadre de support (2) ;
- une trémie (3), disposée au-dessus du cadre de support (2) et comportant d'un orifice d'entrée (3a) pour le chargement de grains de café et un orifice de décharge (3b) pour l'éjection desdits grains de café ;
- un ensemble de mouture (4), disposé en dessous de ladite trémie (3) et en communication avec ledit orifice de décharge (3b), comprenant au moins un premier élément de mouture (4a) et au moins un second élément de mouture (4b) opposés l'un à l'autre, au moins l'un desdits éléments de mouture (4a, 4b) tournant autour d'un axe vertical (X) au moyen d'un premier moteur (5) ;
**caractérisé par le fait qu'**il comprend :
- un premier boîtier (19) de conformation tubulaire associé audit cadre de support (2) et sensiblement coaxial audit axe vertical (X) ;
- un second boîtier (20) de conformation tubulaire disposé à l'intérieur dudit premier boîtier (19) et sensiblement coaxial audit axe vertical (X), ledit premier boîtier (19) et ledit second boîtier (20) étant espacés l'un de l'autre par un intervalle définissant une chambre annulaire (10) apte à recevoir de la poudre de café (P) moulue par ledit ensemble de mouture (4) et à l'acheminer vers un filtre (13) pour machines à café disposé à l'endroit où se trouve un fond de ladite chambre annulaire (10) ;
- des moyens d'actionnement (30) disposés à l'intérieur dudit second boîtier (20) et aptes à déplacer un organe presseur (15) le long dudit axe vertical (X) audit fond de la chambre annulaire (10), ledit organe presseur (15) étant configuré pour presser ladite poudre de café (P) recueillie dans ledit filtre (13).

2. Appareil (1) selon la revendication 1, **caractérisé par le fait que** ledit ensemble de mouture (4), ledit premier moteur (5), lesdits moyens d'actionnement (30) et ledit organe presseur (15) sont alignés entre eux selon ledit axe vertical.

3. Appareil (1) selon l'une ou plusieurs des revendications précédentes, **caractérisé par le fait que** ledit premier moteur (5) est disposé à l'intérieur dudit second boîtier (20) en dessous dudit ensemble de mouture (4).

4. Appareil (1) selon l'une ou plusieurs des revendications précédentes, **caractérisé par le fait que** lesdits moyens d'actionnement (30) comprennent un second moteur (16) apte à actionner un actionneur linéaire (18) relié audit organe presseur (15).

5. Appareil (1) selon l'une ou plusieurs des revendications précédentes, **caractérisé par le fait que** ledit second boîtier (20) est associé audit premier boîtier (19) au moyen d'au moins un bras de support (11).

6. Appareil (1) selon l'une ou plusieurs des revendications précédentes, **caractérisé par le fait que** ledit premier boîtier (19) présente une pièce d'extrémité inférieure (19b) de forme conique.

7. Appareil (1) selon l'une ou plusieurs des revendications précédentes, **caractérisé par le fait qu'**au moins l'une soit d'une surface interne (19a) dudit premier boîtier (19), soit d'une surface externe (20a) dudit second boîtier (20) est constituée d'un matériau antiadhésif.

8. Appareil (1) selon l'une ou plusieurs des revendications précédentes, **caractérisé par le fait qu'**il comprend au moins un logement (17) formé dans ledit cadre de support (2) et apte à recevoir et maintenir ledit filtre (13) pendant la mouture et le remplissage du filtre (13) avec ladite poudre de café (P).

9. Appareil (1) selon l'une ou plusieurs des revendications précédentes, **caractérisé par le fait qu'**il comprend au moins un dispositif d'activation automatique (24) apte à activer automatiquement ledit premier moteur (5) lorsque ledit filtre (13) est placé dans une position prédéfinie.

10. Appareil (1) selon la revendication 9, **caractérisé par le fait que** ledit dispositif d'activation automatique (24) est choisi dans la liste comprenant : un activateur à pression, un activateur à contact électrique ou un activateur à cellule photoélectrique.
